# EUROPEAN PATENT APPLICATION

(11) **EP 4 520 854 A1**
(43) Date of publication of application: **12.03.2025**
(21) Application number: 24020286.1
(22) Date of filing: 05.09.2024
(51) Int. Cl.: C25B 1/04, C25B 9/65, C25B 9/67, C25B 9/75, C25B 9/77, C25B 15/08, H01M 8/00

(54) **ELECTROCHEMICAL CELL PROVIDED WITH MULTILAYERED BIPOLAR PLATE AND SHAPED INSULATING BODY**

(30) Priority: 05.09.2023 IT 202300018258
(71) Applicant: Leonardo Engineers for Integration Srl, 10128 Torino (IT)
(72) Inventor: Bianchi, Pietro, 10129 Torino (IT)
(74) Representative: Saglietti, Luigi

(57) **Abstract**

An electrochemical cell (100) is provided comprising a bipolar plate (10) made of multilayer material having at least two outer sheets (1) and, optionally, at least one inner sheet (2), and an insulating body (5) provided with a reaction chamber (17). Said outer sheets (1) are provided with corrugations (20; 22; 36; 25) formed by cold moulding adapted to cooperate with each other and with corresponding protruding profiles (18; 37; 38; 23) formed on said insulating body (5), said corrugations and profiles realising hydraulic sealing lines, including a peripheral sealing line. Said outer sheets (1) and said inner sheets (2) are provided with first cooling channels (3) for the circulation of a cooling fluid through intake and extraction manifolds (40), whereas said insulating body (5) is provided with second channels (32) for feeding and extracting process fluids to and from said reaction chamber (17) to and from manifolds (39; 41). Said sheets (1; 2) are provided with holes (19) cut along their perimeter, externally to the peripheral sealing line, whereas said sheets (1; 2) and said insulating body (5) are provided with holes (21) cut internally to the peripheral sealing line, wherein said holes (19; 21) cut externally and internally to the peripheral sealing line are adapted to house fastening means (28) for the coupling of a plurality of said sheets (1; 2) and said insulating bodies (5) in a stack (30).

## Description

### FIELD OF THE INVENTION

This invention applies to the electrochemical sector, in particular to electrolytic cells or electrolysers and their assemblies (stacks) for the production of hydrogen and oxygen by electrolysis of water in alkaline cells.

### BACKGROUND OF THE INVENTION

In the state of the art, electrochemical devices and systems are well known, adapted to convert electrical energy into chemical energy, with associated production of chemical products, such as hydrogen and oxygen, or vice versa.

In particular, the so-called electrolytic cells or electrolysers allow the conversion of electrical energy into chemical energy using a process known as "electrolysis".

An example of such a device is known from the patent CH672142. Commonly, an electrolytic cell is essentially made up of two electrodes or bipolar plates made of conductive material and immersed in a conductive fluid (electrolyte), polarized so that there is a constant electric field between them. This electric field induces the migration of ions from the electrolyte towards the electrodes where, interacting with the surface of the latter, they give rise to the electrochemical transformation. These electrolytic cells, in order to increase the production of energy and chemical products, are arranged in series to form a so-called electrolytic battery (or "stack").

In electrochemical cells constructed according to the known art, catalysts may be provided to increase the reaction rate and, consequently, the efficiency of the cell, as well as devices of various kinds for the electrical connection of said catalysts, sometimes improperly called "electrodes", to the bipolar plates. These devices, an example of which is described in patent CH672142, are not part of the present invention.

Interposed between said electrodes is generally a non-conductive element, to maintain the potential difference between the two adjacent bipolar plates, and an element for the separation of the gases and the different process fluids, consisting of a membrane impermeable to the process fluids and the gases developed, but capable of being crossed by an electric current thanks to its chemical-physical constitution.

Also in order to increase their productivity, such electrolytic cells are equipped, in the prior art, with integrated cooling systems as described in documents EP 3 631 884 B1 and US 10,468,691.

This traditional configuration has numerous disadvantages and limitations. In particular, a very large number of components of poor reliability or high cost must be foreseen, with consequent repercussions on the cost and complexity of the system. For example, the body of the stack loaded by the bolts has a significantly lower rigidity than the bolts themselves, leading to the need to use a large number of unreliable elastic washers mounted on both ends of the bolts which require frequent and difficult to control operations of resumption of tightening, while the realization with sheet metal elements manufactured with technologies other than cold forming and which do not avoid necessary welding operations can determine a production cost which is significantly reduced with the present invention. Furthermore, as extensively illustrated, for example, in US8623195, in gas production plants as a product or by-product of the electrolytic reaction, it is useful to increase the operating pressure of the reactants, which in turn reduces the compression power for filling high-pressure cylinders. Now, the high-performance polymers used, as described in patent CH683104A5, for the above-mentioned non-conductive elements are very expensive and subject to creep phenomena when operating at the temperatures and pressures typical of such processes.

EP1830426 discloses a bipolar plate for a fuel cell stack for vehicles. The bipolar plate consists of three stamped elements, made of sheet metal, in particular stainless-steel sheet, two outer and one inner, joined together to form a lamellar pack, for example by welding, brazing or mechanical forming, and connected to each other with a hydraulic seal. Inside the stack, said plates are arranged in alternation with membranes equipped with electrodes on both sides.

A flow field is formed between the respective inner sides of the outer elements and the respective outer side of the inner element. For this purpose, the outer elements are designed as embossed sheets, whose embossing creates a flow field on the outside for the two reaction media, e.g., hydrogen and oxygen.

These devices are intended exclusively for fuel cells for the transformation of hydrogen and oxygen into water and electromotive force.

In electrolysers, the need arises to dispose of the heat produced by energy losses resulting from non-reversible phenomena. To overcome this, it is advisable to provide for the circulation of a cooling fluid inside the body of the bipolar plates, as indicated in EP 3 631 884 B1, this implying the design of flow channels and hydraulic sealing elements so that the process fluids, the electrolytes and the refrigerant liquid, are appropriately conducted where necessary and kept separate from each other.

Electrolytic cells belonging to the prior art present significant limitations and disadvantages in terms of costs, complexity and sizing of the system, electrical resistance, cooling and hydraulic seal of the mechanical components.

Bipolar plates are typically made of welded or expensively machined sheet metal components, while the reagent contact elements are made of expensive specialized materials. To overcome the hydraulic sealing problems arising from the coupling of the components and the rigidity of the materials, common solutions include, for example, expensive and unreliable spring washers mounted on both ends of sealing bolts.

### OBJECT OF THE INVENTION

An object of the present invention is, therefore, to provide an electrochemical cell that overcomes and avoids the main defects and most serious limitations of the prior art.

In particular, an electrochemical cell is provided that is capable of providing improved hydraulic sealing and heat distribution/dissipation specifications and, therefore, can handle higher operating pressures and temperatures. Furthermore, the cell according to the invention is made of relatively low-cost materials and uses fewer mechanical components.

### SUMMARY OF THE INVENTION

These and other purposes are achieved with the electrochemical cell with the characteristics claimed in the enclosed claims.

According to the present invention, an electrochemical cell is proposed comprising a bipolar plate made of a multilayered material having at least two outer sheets and, optionally, at least one inner sheet, and an insulating body provided with a reaction chamber. Said outer sheets are provided with corrugations formed by cold moulding adapted to cooperate with each other and with corresponding protruding profiles formed on said insulating body, said corrugations and profiles realising hydraulic sealing lines, including a peripheral sealing line. Furthermore, said outer sheets and said inner sheets are provided with first cooling channels for the circulation of a cooling fluid through intake and extraction manifolds, while said insulating body is provided with second channels for feeding and extracting process fluids to and from said reaction chamber to and from manifolds.

Said sheets have holes obtained along their perimeter, externally to the peripheral sealing line. Said sheets and said insulating body are also provided with holes cut internally to the peripheral sealing line, wherein said holes cut externally and internally to the peripheral sealing line are adapted to house fastening means for the coupling of a plurality of said sheets and said insulating bodies in a stack.

Preferably, said first channels are metal channels obtained in the constituent elements of the bipolar plate by cold forming, blanking or cutting.

Alternatively, said first channels and said second channels are obtained in the insulating body by injection or compression moulding and made of polymeric or elastomeric material.

Said cooling channels can have a rectilinear or curvilinear geometry.

Said second channels have a greater length than the distance between said manifolds and said reaction chamber.

Advantageously, the bipolar plate comprises openings for the inlet and outlet of process fluids and openings for the inlet and outlet of a cooling fluid, said openings being provided with sealing elements.

Preferably, the sheets are made of stamped, cut or blanked sheet metal.

In some embodiments, the insulating body is made of a single rubber element and comprises a separating membrane of conductive material impermeable to process fluids and reaction gases, said membrane being included between said insulating body and a suitable frame. In addition, or alternatively, the insulating body has rigid embedded frame.

Furthermore, a stack comprising a plurality of electrochemical cells according to the present invention is provided wherein a plurality of said sheets and said insulating bodies are coupled by means of fastening means housed internally to said protruding profile, wherein said fastening means cooperate with a series of spacer elements and bushings made of non-conductive material, wherein the spacer elements are made of ceramic or compression-resistant polymeric material.

### BRIEF DESCRIPTION OF THE FIGURES

These and other features and advantages of the present invention will become clear from the following description of preferred embodiments made by way of non-limiting example with reference to the accompanying drawings, in which:
- FIG. 1A shows an exploded view of a bipolar plate according to the present invention;
- FIG. 1B shows an assembled configuration of the bipolar plate of FIG. 1 and related sectional views;
- FIG. 2A shows an exploded view of an electrochemical stack equipped with an electrochemical cell according to the invention;
- FIG. 2B shows an assembled configuration of the electrochemical cell of FIG. 2A;
- FIG. 2C shows sectional views of the electrochemical cell of FIG. 2A;
- FIG. 3A shows a front and rear view of an insulating body according to the invention and related sectional views;
- FIG. 3B shows perspective and sectional views of a frame suitable for being associated with the insulating body of FIG. 3A;
- FIG. 4A shows an exploded isometric view of an electrochemical cell according to the invention;
- FIG. 4B shows orthogonal and sectional views of the cell of FIG. 4A;
- FIG. 4C shows sectional views of the cell of FIG. 4A in which the bipolar plate of an adjacent cell is also reproduced;
- FIG. 5A shows an exploded view of a further preferred embodiment of a bipolar plate according to the invention;
- FIG. 5B shows an exploded view of an electrochemical cell equipped with a bipolar plate according to FIG. 5A.

### DETAILED DESCRIPTION OF PREFERRED EMBODIEMENTS

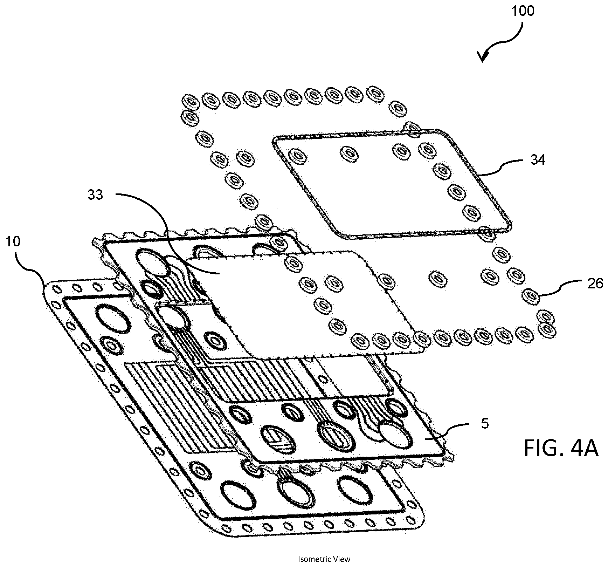

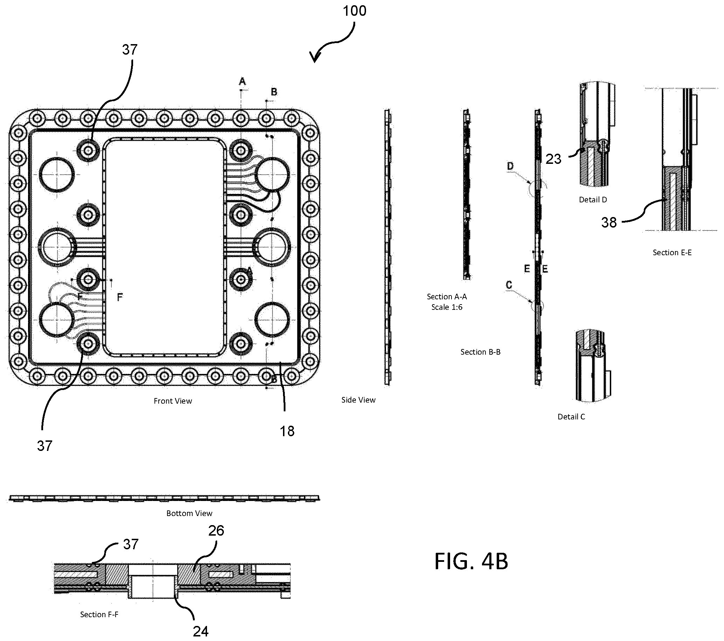

With reference to Figures 4A - 4C, the reference numeral 100 indicates an electrochemical cell according to the invention. In the course of the present invention, as known to the expert, the term "electrochemical cell" is intended to mean any device capable of converting electrical energy into chemical energy or chemical energy into electrical energy, such as batteries, fuel cells and electrolytic cells. In particular, but without limitation, the present invention refers to electrolytic cells, also known as electrolysers designed for the transformation of electrical energy into energy and chemical products, in particular hydrogen and oxygen by electrolysis in an aqueous medium.

According to the invention, the cell 100 comprises a bipolar plate 10 made of a multilayered conductive material. Said plate 10 is provided with at least two outer sheets 1 and, optionally, at least one inner sheet 2. Inside the cell 100, the outer sheets 1 are in direct contact with the reagents (liquids and reaction gases), while the inner sheets 2 come into contact exclusively with a cooling fluid suitable for cooling the cell 100. This involves a choice of materials appropriate to the respective functions. The function of the at least one inner sheet 2 is to provide structural rigidity to the assembly and to allow support for the sealing of the cooling circuit.

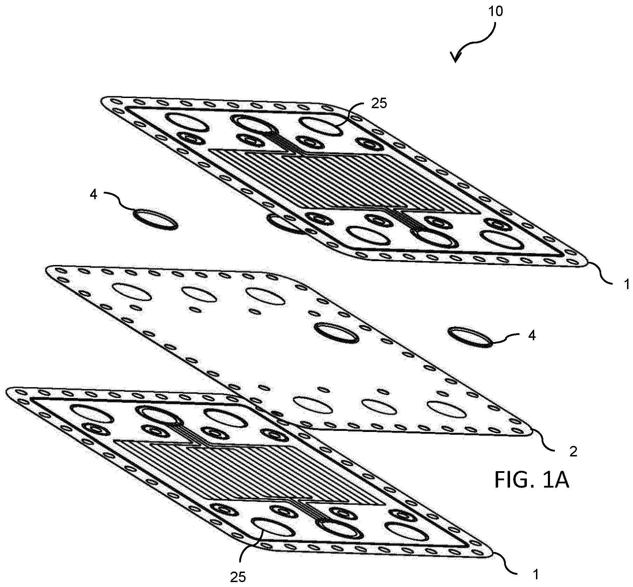

In a preferred embodiment, illustrated in Fig. 1A, the plate 10 comprises two outer sheets 1 and an inner sheet 2. It is clear to the expert that the plate 10 may have a greater number of outer sheets 1 and/or inner sheets 2 without departing from the scope of protection of the present invention.

Advantageously, said sheets 1; 2 are made of stamped, cut or blanked metal sheet. This allows a significant reduction in manufacturing costs, as well as an improvement in performance compared to common sheets made with welded elements and/or complex mechanical processes.

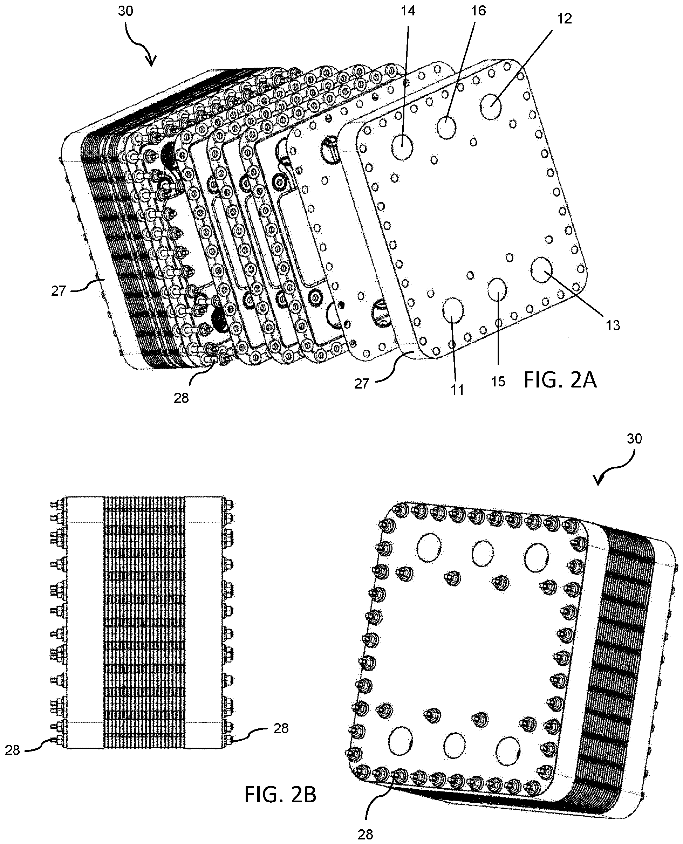

Furthermore, the cell 100 comprises an insulating body 5. In a common electrochemical reaction stack 30, schematically illustrated in Figures 2A and 2B, said insulating bodies 5 are interposed between the bipolar plates 10 to form, in fact, a stack of said elements. The plurality of cells 100 is held together by two metal plates 27 of greater thickness placed at the ends of the stack 30, the whole being tightened by a plurality of fastening means 28, for example bolts, as specified below in greater detail with reference to a preferred embodiment.

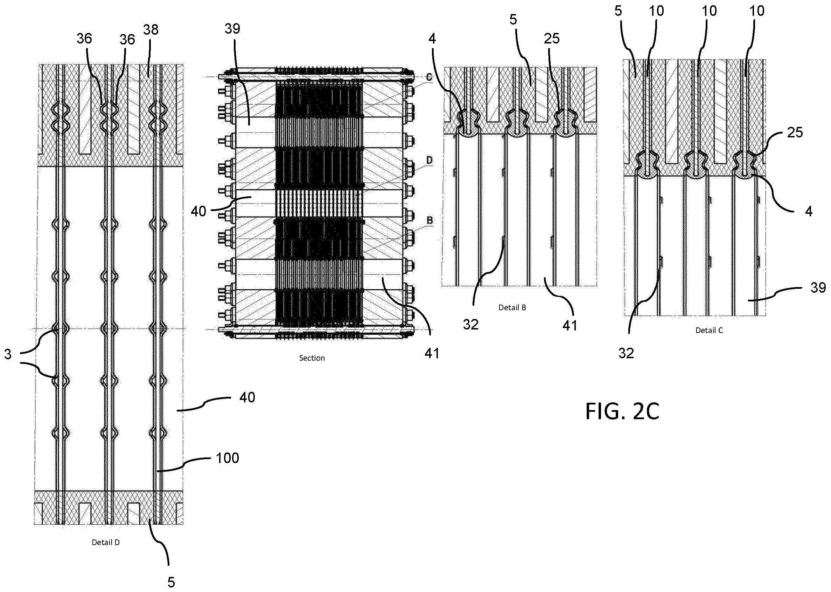

According to the invention, said fastening means 28 cooperate with a series of spacer elements 26 and bushings 24 made of non-conductive material, for example ceramic material or compression-resistant polymeric material. Thanks to this solution, when the mounting bolts 28 are tightened, the body 5 is compressed between two adjacent bipolar plates 10 up to a defined thickness, as shown in Fig. 2C, which correctly defines the contact pressure between the rubber element 5 and the metal of the plates 10, achieving the required sealing capabilities. In this way, the tightening of the bolts 28 is obtained against a pack, which is much more rigid than the bolt 28 itself and allows the formation of a sufficient elastic reserve avoiding the interposition of expensive and unreliable spring washers.

The insulating body 5 defines and delimits the extension of a reaction chamber 17, where the electrolytes flow to participate in the electrochemical reactions.

Furthermore, the insulating body 5 comprises a separating membrane 33 made of conductive material, but impermeable to process fluids and reaction gases, said membrane 33 being, advantageously, included between said insulating body 5 and a special frame 34 made of rubber or plastic material as illustrated, by way of example, in Fig. 4A.

The conductivity of said membrane 33 is appropriately calibrated to the process in order to avoid short circuits between the conductive elements of the cell.

In the present description, the term "process fluids" is used to mean any fluid, reagent or product, which participates in the electrochemical reactions which occur in the reaction chamber 17.

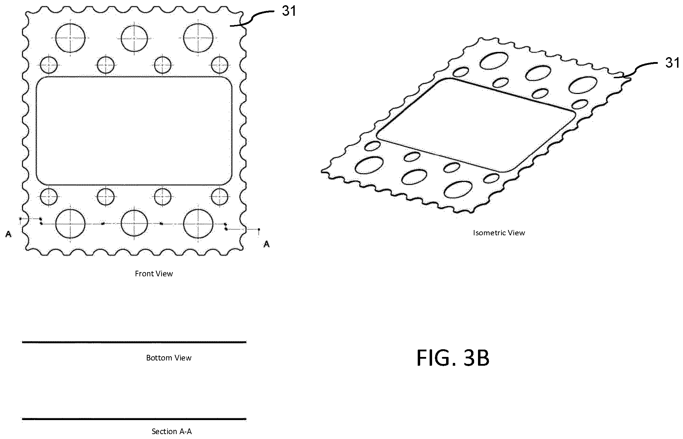

Advantageously, the insulating body 5 can be made of a single rubber element, while a rigid frame 31, illustrated schematically in Fig. 3B, can be incorporated into said insulating body 5 where the operating pressures of the stack 30 require it. Said frame 31, in fact, contributes to the resistance of the insulating body 5 by opposing the forces due to the internal pressure, which can lead to its extrusion towards the outside.

According to the invention, said outer sheets 1 are provided with corrugations formed by cold moulding designed to cooperate with each other and with corresponding protruding profiles formed on said insulating body 5, said corrugations and profiles realising and increasing hydraulic sealing lines between said elements 1; 2; 5, including a peripheral sealing line.

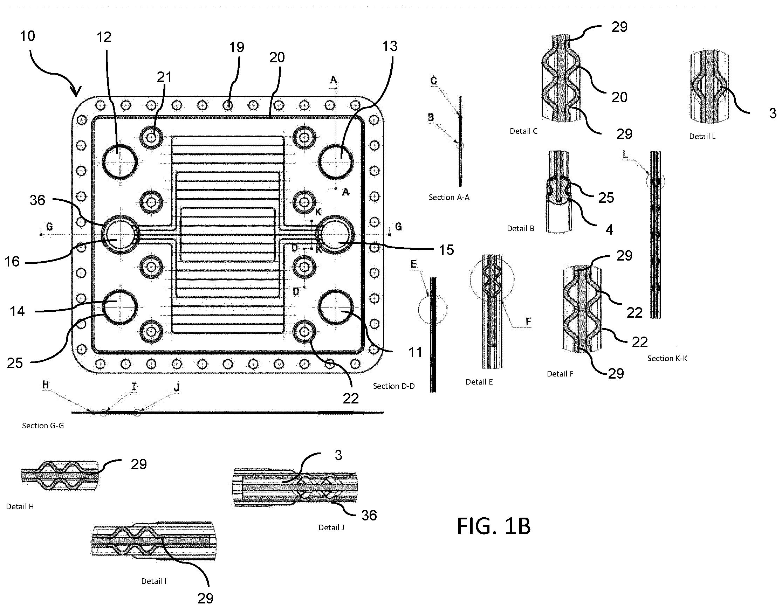

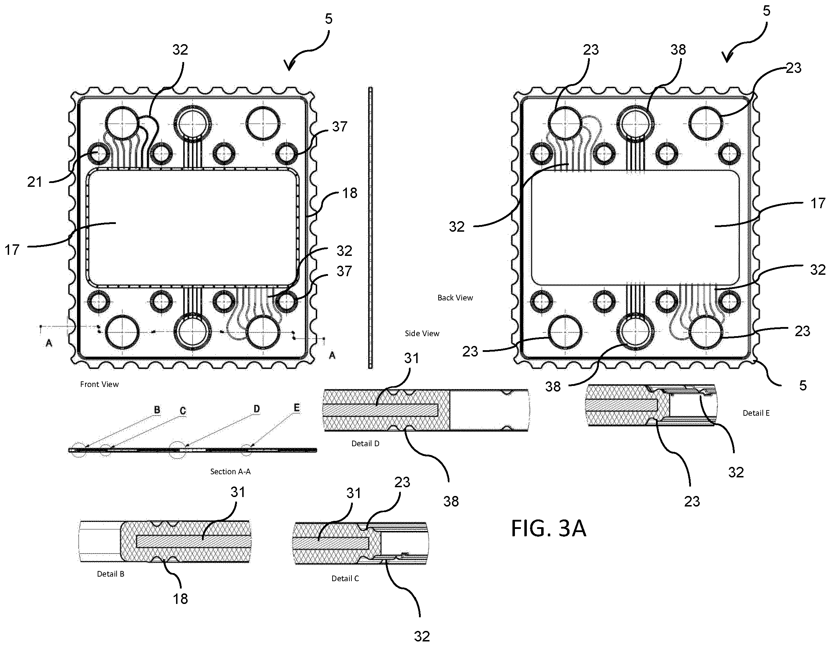

With reference to Fig. 1B, corrugations 20; 22; 36; 25 corresponding to protruding profiles 18; 37; 38; 23, showed in Fig. 3A, are illustrated, by way of example only. It is clear to the expert that said inner sheets 2 could also present corrugations corresponding to the corrugations 20; 22; 36; 25, for example for design purposes, for reasons of assembly and/or alignment of the sheets 1; 2. Alternatively, said inner sheets 2 could present cut elements suitable for creating special channels between two outer sheets 1.

In particular, the profiles 18 cooperate with the corrugations 20 to define a perimeter seal towards the outside, the profiles 37 cooperate with the corrugations 22 to define a sealing profile around the fastening elements 28 inside the profiles 18 and the corrugations 20, the profiles 38 cooperate with the corrugations 36 to define a sealing profile around cooling fluid manifolds 40; and, finally, the profiles 23 cooperate with the corrugations 25 and the sealing profiles 4 to create the seal towards process fluid manifolds 41; 39 towards the reaction chamber 17 and towards a gap present between the outer sheets 1 and the inner sheets 2. It should be noted in Figures 2C and 3A that these profiles 23 are interrupted on one side of the cell 100 by the channels 32, as described below, so as to alternatively and appropriately connect the process fluid manifolds 39; 41 to the two portions of the reaction chamber 17 into which this is divided by the membrane 33. In this way the two process fluids flow in and out from the same side of the cell 100 throughout the stack 30. If necessary, in correspondence with the channels 32, the corrugations 25 are appropriately modified to prevent them from reducing or obstructing the passage of the process fluids to and from the reaction chamber 17.

It is evident to those skilled in the art that variations in the number, arrangement and geometry of said corrugations and protruding profiles are possible without departing from the scope of protection of the present invention.

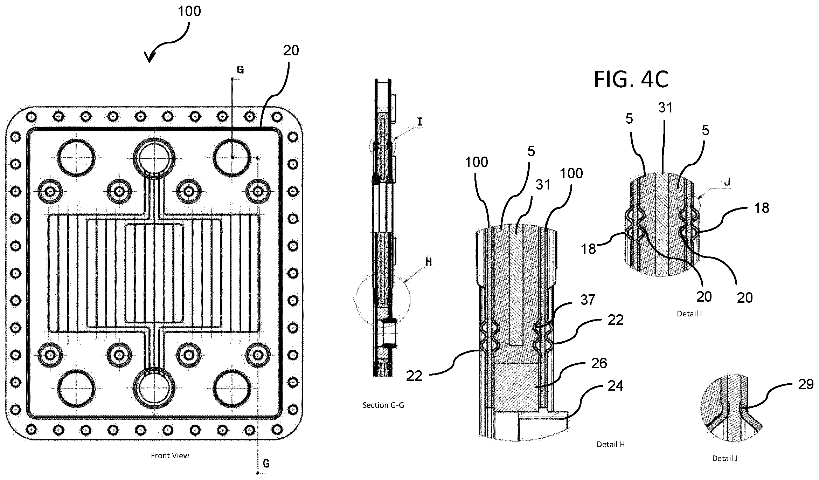

The geometry of said corrugations in a preferred embodiment is illustrated in the sections of Fig. 4C. The corrugations provided on the outer sheets 1, coming into contact with the inner sheet 2 on one side and with the insulating body 5 on the opposite side, form a continuous sealing line that prevents the escape of process fluids.

In case of metal-to-metal contact, an additional sealant layer can be deposited to prevent leakage due to surface roughness. In such situations, furthermore, an additional corrugation 29 between the outer sheets 1 and the inner sheets 2, on the contact side can be provided, in order to increase the contact pressure.

Thanks to this solution, the distance between the plates 10, inside the stack 30, was found to be significantly smaller than known solutions, with a decrease in electrical resistance, reduction in size and weight of the device.

In addition, according to the invention, said outer sheets 1 and said inner sheets 2 are provided with first channels 3 for the circulation of a cooling fluid through intake and extraction manifolds 40, while said insulating body 5 is provided with second channels 32 for feeding and extracting process fluids to and from said reaction chamber 17 to and from manifolds 39; 41. This is done so that said fluids remain separate from each other, the coolant one being forced between the two outer sheets 1 of the bipolar plate 10 and the process fluids in the reaction chamber 17, obtained in the insulating body 5 and appropriately separated by the membrane 33.

Advantageously, said channels 3 can be metal channels obtained by cold forming, blanking or cutting. Alternatively, or in addition, said channels 3; 32 can be advantageously made of polymeric or elastomeric components obtained by injection or compression moulding.

The geometry of the cooling channels 3 can be rectilinear or curvilinear, depending on the specific requirements.

According to the invention, said channels 32 have a greater length than the distance between said manifolds 39; 41 and said reaction chamber 17. The greater the length of said channels 32, obtained by means of curvilinear trajectories, even complex ones, the greater their electrical resistance will be, which allows a significant reduction in losses due to parasitic currents of the electrochemical cell 100 compared to the devices belonging to the prior art.

It is evident that also in the present case variations in the number, arrangement, geometry and typology of said channels 3; 32 will be possible, without going beyond the scope of protection defined by the attached claims. For example, said channels 3 may be provided exclusively in the outer sheets 1 of the bipolar plate 10 or exclusively in the inner sheets 2 or, again, in both, meaning that they will be obtained partially in the outer sheets 1 and in the inner sheets 2.

Preferably, said sheets 1; 2 are provided with holes 19 cut along their perimeter, externally to the peripheral sealing line, adapted to house the fastening means 28.

Furthermore, according to the invention, said sheets 1; 2 and said insulating body 5 have holes 21 obtained internally to said peripheral sealing line, also adapted to house fastening means 28 for the coupling of a plurality of said sheets 1; 2 and said insulating bodies 5 in a stack 30.

This arrangement proves to be particularly advantageous, compared to devices according to the prior art, since it allows for a better distribution of the load where required, increasing the strength of the components.

In common electrochemical cells, there is at least one pair of passages for each type of process fluid, the position and number of which are not relevant to the invention. The only constraint on such passages is generally constituted by the fact that their arrangement should be external with respect to the perimeter delimiting the reaction chamber 17. A non-limiting example according to the invention is shown in Fig. 3A.

The bipolar plate 10 may comprise openings 11; 12 for the inlet and outlet of a process fluid [A], for example a first electrolyte; openings 13; 14 for the inlet and outlet of a process fluid [B], for example a second electrolyte; and openings 15; 16 for the inlet and outlet of a cooling fluid.

Said openings 11; 12; 13; 14 are advantageously defined by corrugations 25.

When a plurality of cells 100 are assembled into a stack 30, such openings form continuous longitudinal channels, i.e. the manifolds 39, 40 and 41 as defined above, through the complete stack 30. Such channels may be multiple and of reduced size for better exploitation of the surface of the bipolar plate 10 for the benefit of the reaction chamber 17. Non-circular passages may also be used to increase the usable area of the reaction chamber 17.

Advantageously, sealing elements 4, shown in Fig. 1A, can be provided in correspondence with said openings 11; 12; 13; 14, in order to avoid leaks between the sheets 1 and 2. Said sealing elements 4 can be constituted, for example, by rubber gaskets with a U-shaped section.

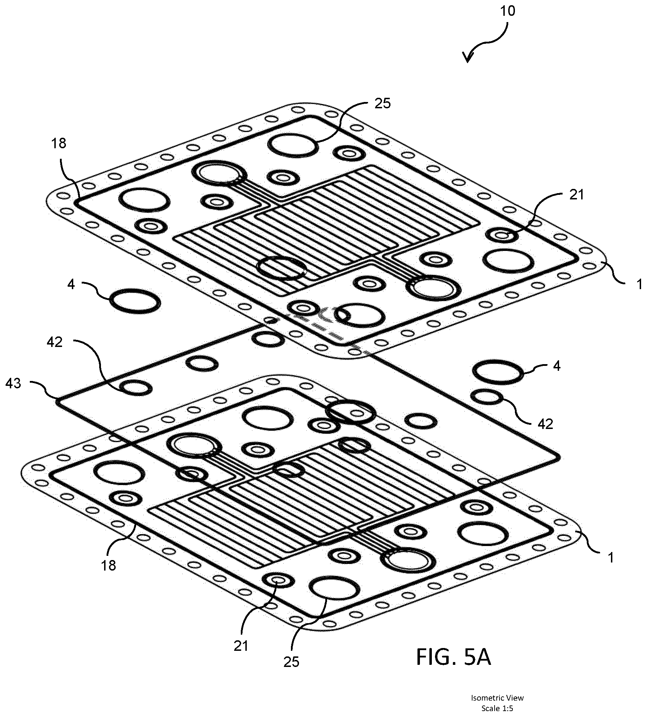

According to a further equally preferred embodiment, the bipolar plate 10 according to the invention may not be provided with an inner sheet 2, as schematically illustrated in Fig. 5A, and may only have the outer sheets 1. Similarly to the embodiment described above, first channels 3 may be provided for the supply of cooling fluid through the two sheets 1 and the removal of heat generated by the irreversible phenomena of chemical reactions. The path of such channels 3, if deemed appropriate, may not be identical in the two sheets 1 and, therefore, generate appropriate flow crossings while maintaining an adequate contact surface for the transmission of electric current between one sheet and the other.

Likewise, second channels 32 may be provided for feeding and extracting process fluids, as defined above, to and from a reaction chamber, to and from suitable manifolds.

Sealing elements 4, designed to prevent process fluids from entering between the two sheets 1 and polluting the cooling fluid, can be placed between said sheets 1 in the corrugations 25.

Additional sealing elements 42, suitable for preventing the leakage of the cooling fluid towards the holes 21 of the fastening means 28 inside protruding profiles 18, and 43, positioned along said protruding profile 18, can also be provided.

It is clear to those skilled in the art that said sealing elements 42 and 43 can be replaced by a suitable adhesive or sealant or elastomeric layer deposited, for example, by screen printing, which prevents leakage towards the outside or towards the seat of the fastening means 28.

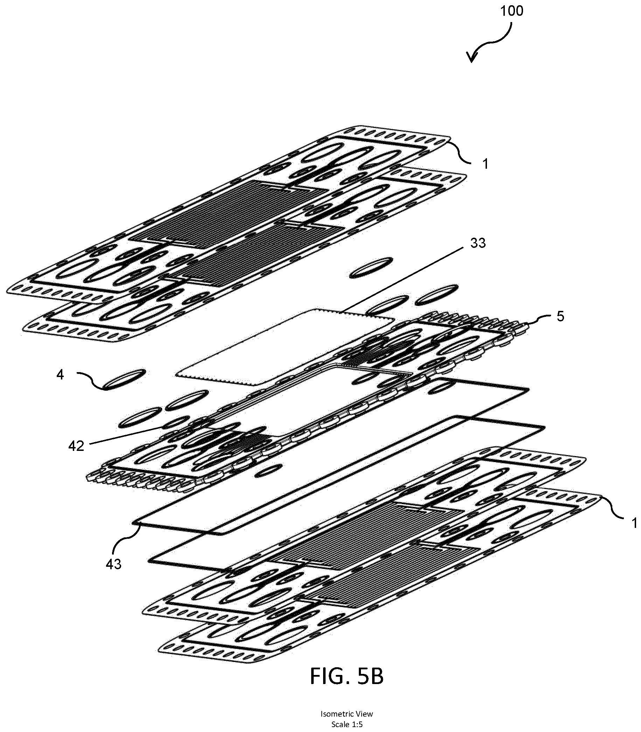

The cell 100 thus constructed and schematically reproduced in Fig. 5B is simpler, less expensive and less bulky than the embodiment described previously.

It is clear to the expert that the operation of the rest of cell 100 remains identical and does not need to be described again.

It is evident that what is described is given solely as a non-limiting example and that variations and modifications are possible without departing from the scope of protection of the invention, as defined by the attached claims.

## Claims

1. Electrochemical cell (100) comprising a bipolar plate (10) made of a multilayered material having at least two outer sheets (1) and, optionally, at least one inner sheet (2), and an insulating body (5) provided with a reaction chamber (17), **characterised in that** said outer sheets (1) are provided with corrugations (20; 22; 36; 25) formed by cold moulding adapted to cooperate with each other and with corresponding protruding profiles (18; 37; 38; 23) formed on said insulating body (5), said corrugations and profiles realising hydraulic sealing lines, including a peripheral sealing line; **in that** said outer sheets (1) and said inner sheets (2) are provided with first cooling channels (3) for the circulation of a cooling fluid through intake and extraction manifolds (40) **and in that** said insulating body (5) is provided with second channels (32) for feeding and extracting process fluids to and from said reaction chamber (17) to and from manifolds (39; 41), wherein said sheets (1; 2) are provided with holes (19) cut along their perimeter, externally to the peripheral sealing line, and wherein said sheets (1; 2) and said insulating body (5) are provided with holes (21) cut internally to the peripheral sealing line, wherein said holes (19; 21) cut externally and internally to the peripheral sealing line are adapted to house fastening means (28) for the coupling of a plurality of said sheets (1; 2) and said insulating bodies (5) in a stack (30).

2. Electrochemical cell (100) according to claim 1 wherein said first channels (3) are metal channels obtained by cold forming, blanking or cutting.

3. Electrochemical cell (100) according to claim 1 wherein said channels (3; 32) are made of polymeric or elastomeric components obtained by injection or compression moulding.

4. Electrochemical cell (100) according to any of the preceding claims wherein said second channels (32) have a greater length than the distance between said manifolds (39; 41) and said reaction chamber (17).

5. Electrochemical cell (100) according to any of the preceding claims wherein the bipolar plate (10) comprises openings (11; 12) for the inlet and outlet of a process fluid [A]; openings (13; 14) for the inlet and outlet of a process fluid [B] and openings (15; 16) for the inlet and outlet of a cooling fluid.

6. Electrochemical cell (100) according to claim 5 comprising sealing elements (4) at said openings (11; 12; 13; 14).

7. Electrochemical cell (100) according to any of the preceding claims wherein further sealing corrugations (29) are provided between the outer sheets (1) and the inner sheets (2) of said bipolar plate (10).

8. Electrochemical cell (100) according to any of the preceding claims wherein said sheets (1; 2) are made of stamped, cut or blanked metal sheet.

9. Electrochemical cell (100) according to any of the preceding claims wherein the insulating body (5) comprises a separating membrane (33) of conductive material impermeable to process fluids and reaction gases, said membrane (33) being included between said insulating body (5) and a frame (34) made of rubber or plastic material.

10. Electrochemical cell (100) according to any of the preceding claims wherein the insulating body (5) is made of a single rubber element.

11. Electrochemical cell (100) according to any of the preceding claims wherein the insulating body (5) is provided with a rigid embedded frame (31).

12. Stack (30) comprising a plurality of electrochemical cells (100) according to any of the preceding claims wherein a plurality of said sheets (1; 2) and said insulating bodies (5) are coupled by means of fastening means (28) housed internally to said protruding profile (18), wherein said fastening means (28) cooperate with a series of spacer elements (26) and bushings (24) made of non-conductive material, wherein the spacer elements (26) are made of ceramic or compression-resistant polymeric material.
